# EUROPEAN PATENT APPLICATION

(11) **EP 1 632 884 A1**
(43) Date of publication of application: **08.03.2006**
(21) Application number: 05019044.6
(22) Date of filing: 01.09.2005
(51) Int. Cl.: G06K 11/00

(54) **Interaction object**

(30) Priority: 02.09.2004 US 933029
(71) Applicant: SAP AG, 69190 Walldorf (DE)
(72) Inventor: Wagner, Dirk, P., 66578 Schiffweiler (DE); Burgert, Joachim, T., 67124 Speyer (DE); Ritter, Gerd, M., 69124 Heidelberg (DE)
(74) Representative: Müller-Boré & Partner Patentanwälte

(57) **Abstract**

The present invention provides a system and method for providing customer relationship management by tracking customer interactions. Customer interactions include contact with customers using asynchronous communications such as e-mail, short message service (SMS) text messages from mobile phones, letters and FAXes. The system and method of the present invention include an interaction object for representing customer contact. Interaction objects are generated and stored in contact tracking storage for data that comprises details about customer contact. The interaction object is kept as an independent object outside of order object generating software. The interaction object may also be integrated with customer relationship management application software such as software used for account management. The interaction object may be used in high mass data scenarios to reduce the system resources and processing time needed to track a large volume of customer interactions, such those associated with a marketing campaign. The interaction object may be used to maintain data associated with a customer interaction in a single easily-retrievable format. In one embodiment of the invention, the interaction object is integrated into a reporting framework to provide reporting capabilities. In alternate embodiments of the invention, interaction object archiving is also performed, which is included in campaign archiving to reduce data volume.

## Description

### BACKGROUND

Information and computer technology comprises an essential component for modern business operations. The utility of computer technology has been enhanced by the coupling of computers with information networks such as the Internet and World Wide Web ("WWW"). Companies use computer facilities to engage in marketing campaigns using communications such as e-mail, letters and facsimiles (FAXes).

During marketing campaigns it is useful to manage and process information such as contact history about individual customers across touch points whether they are inbound or outbound interactions regarding sales, service or marketing. This logged information can be used for a variety of reasons including providing better service to customers and clients. A reporting framework is maintained to generate reports from this stored information for analysis. This reporting framework may make use of a reporting object that models business activity using business objects. A generic user interface (GUI) is used to review these reports.

However, marketing campaigns often involve mass communications, such as very high volumes of e-mails. These mass communications are resource-intensive consuming time and hardware memory, as well as providing other burdens on the system. Due to this high data volume, performance of the system may be slow and involve other quality issues such as errors.

### BRIEF DESCRIPTION OF THE DRAWINGS

FIG. 1 shows architecture for an customer interaction tracking environment according to one embodiment of the present invention.

FIG. 2 depicts an architectural view of an interaction object according to one embodiment of the present invention.

FIG. 3 depicts an architectural view of a contact tracking storage according to one embodiment of the present invention.

FIG. 4 shows a method for providing customer relationship management by tracking customer interactions according to one embodiment of the present invention.

FIG. 5 shows a method for generating a report providing customer relationship management information according to one embodiment of the present invention.

FIG. 6a depicts the display of interaction objects resulting from a search according to one embodiment of the present invention.

FIG. 6b depicts the display of an interaction object selected from search results according to one embodiment of the invention.

FIG. 7 depicts the display of an interaction object generated as the result of sending an E-mail or SMS message according to one embodiment of the present invention.

FIG. 8 depicts the display of an interaction object generated as the result of sending a FAX or letter according to one embodiment of the present invention.

FIG. 9 depicts the display of previous interactions with a customer and a user interface for receiving follow-up actions.

FIG. 10 shows a customer relationship management system according to one embodiment of the invention.

FIG. 11 depicts a customer relationship management device according to one embodiment of the invention.

### DETAILED DESCRIPTION

The present invention provides a system and method for tracking customer interaction or contact, such as sending an electronic mail message (e-mail), Short Message Service (SMS) text message, facsimile or letter, which may be used for providing customer relationship management, for example, during execution of a marketing campaign. According to the present invention, an interaction object may be used for representing customer contact. The interaction object is kept as an independent object outside of order object generating software. The interaction object may be used in high mass data scenarios to reduce the system resources and processing time needed to track a large volume of customer interactions, such those associated with a marketing campaign. Because the data associated with customer interactions is stored together in easily retrievable objects, alleviating the need to access many large databases and search for relevant information, the customer interaction data may be efficiently accessed and processed. Additionally, the single easily retrievable format of the interaction object simplifies other software processes, such as the display of data.

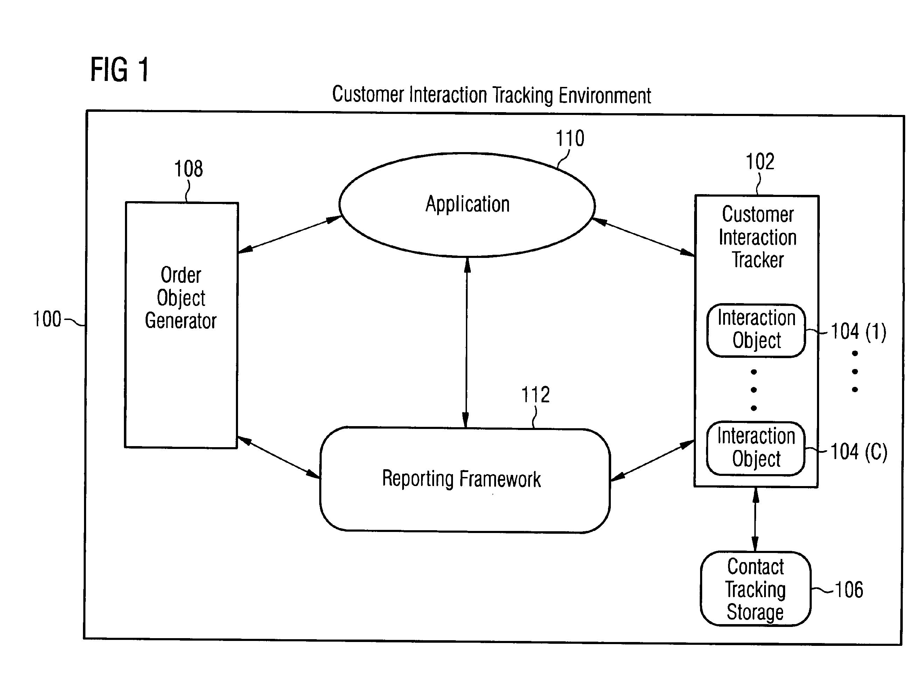

Figure 1 shows an architecture for an customer interaction tracking environment 100 according to one embodiment of the invention. Customer interaction tracking environment 100 comprises customer interaction tracker 102, contact tracking storage 106, order object generator 108, application 110, and reporting framework 112. Customer interaction tracking environment 100 provides customer relationship management by tracking customer interactions.

Customer interaction tracking environment 100 may comprise computer code that resides in memory and is processed by processors. Computer code may be machine instructions for a programmable processor that is implemented in any combination of any high-level procedural, object-oriented and/or assembly machine language and may include any one or more computer programs, software, software applications, or subsets thereof including software functions, modules and routines, that are executable and/or interpretable on a programmable system including at least one programmable processor.

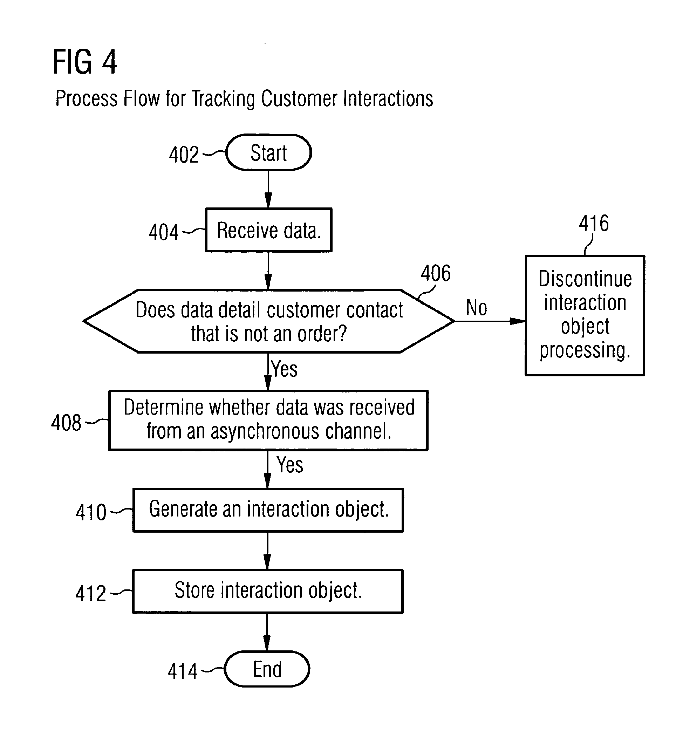

Customer interaction tracker 102 may be implemented in computer code and may track contact with a customer using interaction objects 104(1) - 104(C). Interaction objects 104(1) - 104(C) track interactions with a customer, including any communications via e-mail, SMS text message, FAX, or letter. The terms interaction and contact are used interchangeably herein. This interaction with a customer or customer contact may occur during marketing campaigns and may be inbound contact (from the customer) or outbound contact (to the customer). In an alternate embodiment of the invention, interaction objects 104(1) - 104(C) are used to track only outbound contacts to customers. Customer interaction tracker 102 and interaction objects 104(1) - 104(C) are independent of order object generator 308 to improve system performance by improving efficiency and speed. Interaction objects 104(1) - 104(C) also allow the system to provide a uniform overview of output contacts for users and is more focused on customer requirements. The processing performed by customer interaction tracker 102 is described in further detail with respect to Figure 4.

According to one embodiment of the invention, interaction objects 104(1) - 104(C) may be displayed. To display one or more interaction objects 104(1) - 104(C), a user may perform a search. In one embodiment of the invention, a user searches for an interaction object 304 by specifying a business partner using, for example, a globally unique identifier "PARTNER_GUID." A business partner may be an organization, such as a corporation, that uses customer relationship management software to enhance its marketing and sales activities. Alternatively, a business partner may be a person who may or may not have an affiliated organization. A user may be able to customize types of business partners e.g., organizations, people, or other business partners. Searches may also be performed using other criteria or additional criteria.

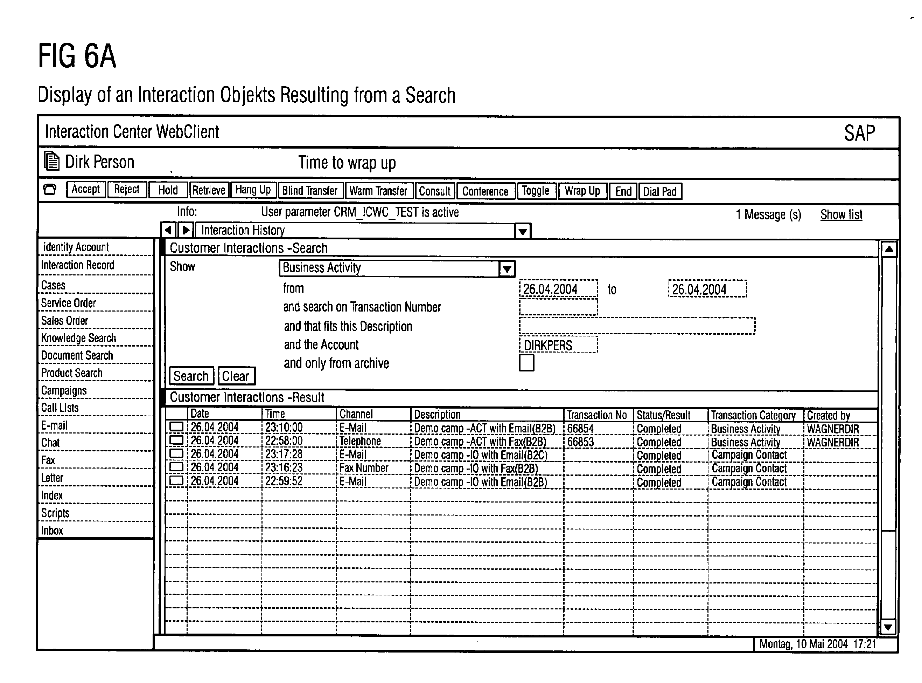

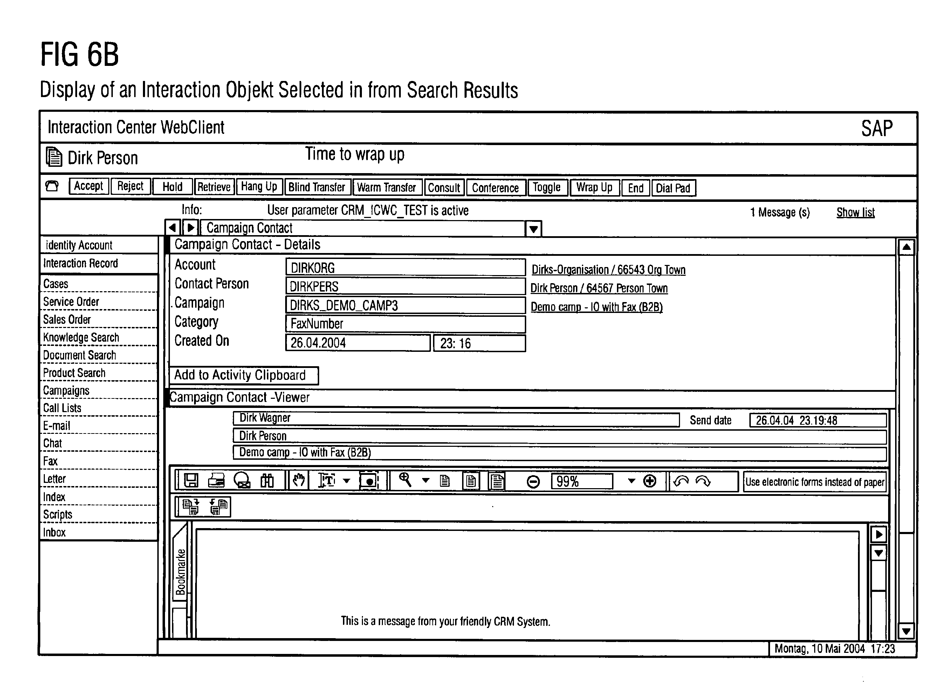

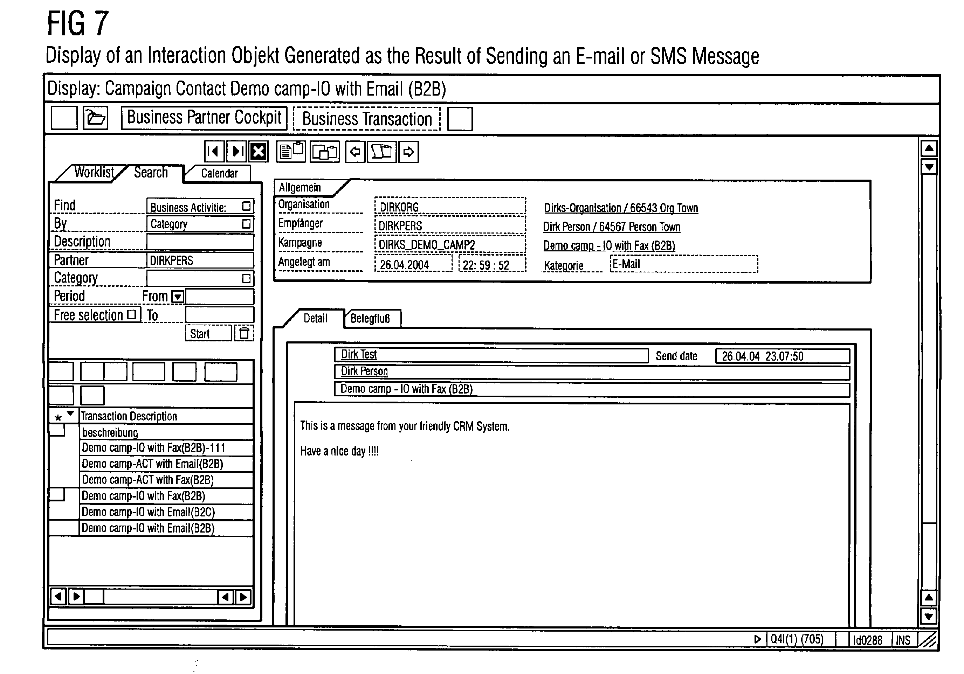

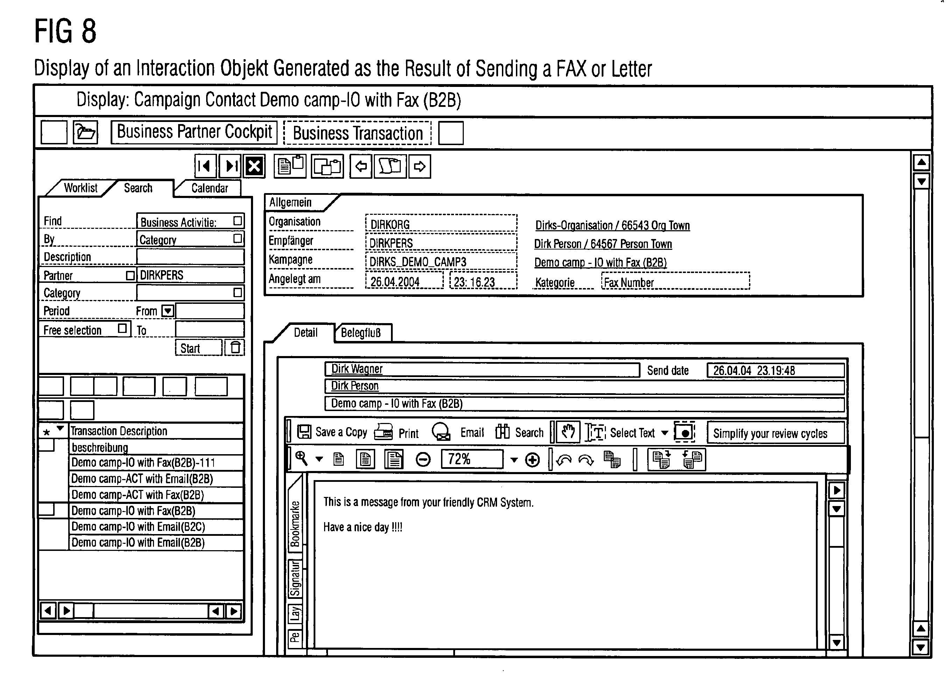

A user causes an interaction object 104 to be displayed by selecting one from a hit list of those of interaction objects 104(1) - 104(C) that are retrieved in the search. The display of one embodiment of a search menu is illustrated in Figure 6. The display of an interaction object 104 that represents a contact via e-mail or an SMS text message is illustrated in Figure 7. The display of an interaction object 104 that represents a contact via FAX or letter is illustrated in Figure 8. FAXes and letters may be stored in electronic files, such as files formatted using Adobe portable document format (PDF), which is a widely accepted format for storing electronic documents.

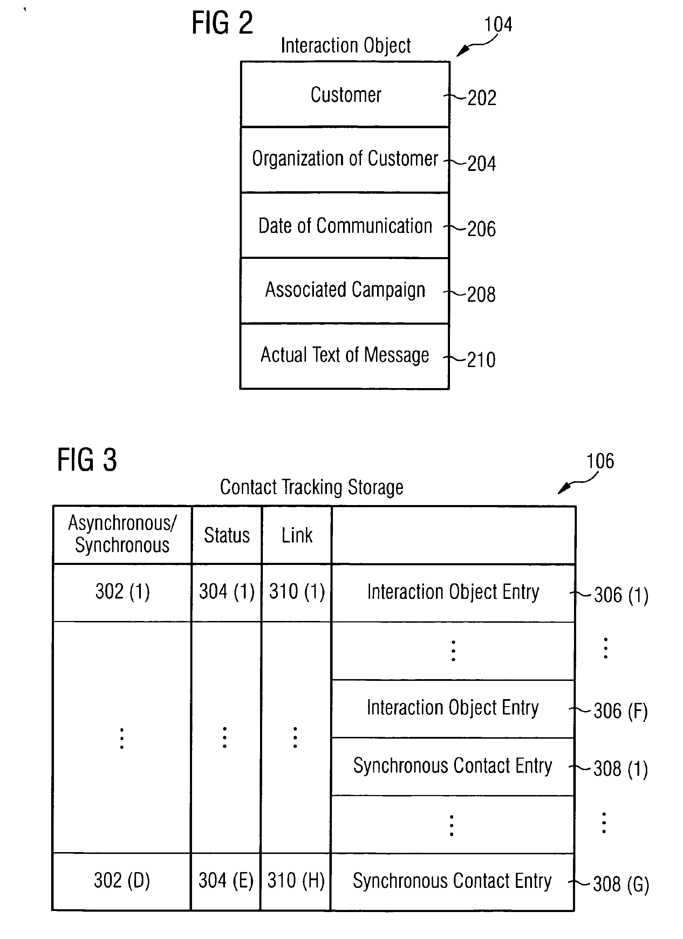

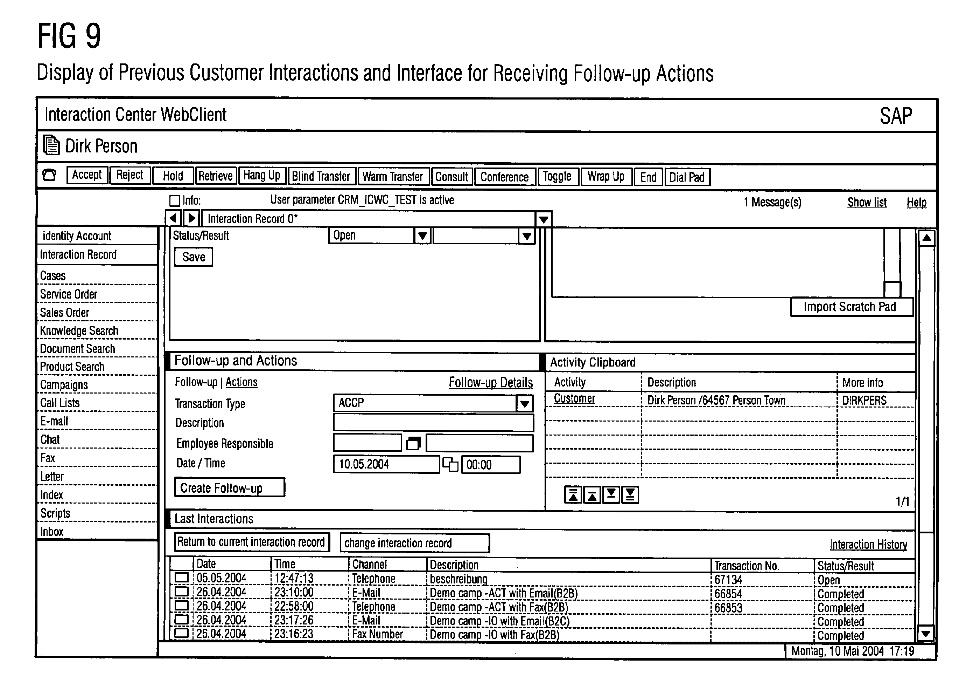

Customer interaction tracking environment 100 may also include follow-up transactions code that may be computer code used to perform transactions that follow-up on customer interactions represented by any one of interaction objects 104(1) - 104(C). Follow-up transactions are described in more detail with respect to Figure 9. Interaction objects 104(1) - 104(C) are described in further detail with respect to Figure 2.

Contact tracking storage 106 may be any storage that is used for tracking customer contacts. In one embodiment of the invention contact tracking storage 106 is a set of tables residing in machine-readable medium that are used to keep track of customer contacts, including contacts represented by interaction objects 104(1) - 104(C). These tables may comprise a table for tracking outbound customer contacts and another table for tracking inbound customer contacts. These tables may be used to track customer contacts that happen within one or more campaigns. In alternate embodiments of the invention, contact tracking storage 106 is any one or more tables or any collection of adjacent fields stored in memory including one or more arrays, records, files, or any other collection of inbound and/or outbound contact data that is stored in machine-readable medium and can be retrieved by a programmable processor.

Order object generator 108 generates order objects that represent order activities and/or sales orders. In one embodiment of the invention, order object order generator generates order objects that have an order pointer that points to them and/or may identified using an globally unique identifier (GUID) such as a "ORDER_GUID" field. Interaction objects 104(1) - 104(C) by definition are not order objects. Order object generator 108 may be responsible for a large portion of processing during run-time. As shown in Figure 2, a customer interaction object 104 is lean including few fields. Customer interaction tracker 102 and interaction objects 104(1) - 104(C) are independent of order object generator 108 and order objects to reduce processing time.

Application 110 may interact with any set of electronic data including electronic data stored in one or more files or in a portion of a file that is processed to perform a specific function typically for a user. In one embodiment of the invention, application 110 is a customer relationship management such as an account management application. Application 110 may be implemented as middleware (e.g., between a client and a server).

Reporting framework 112 comprises the computer code needed for reporting. Reporting framework 112 need not correspond to an object-oriented class library but in some implementations of the invention may correspond to one or more object-oriented class libraries. Reporting framework 112 provides one or more reports, which are any one or more collections of data, facts and/or figures. Reporting framework 112 may be implemented in a back-end database layer.

Reporting framework 112 generates reports used, for example, by agents in a Customer Interaction Center who respond to telephone calls from customers. According to one embodiment of the invention, an agent who receives a call from a customer referring to a marketing campaign may generate a report for a business partner of customer interactions. The agent will identify the corresponding interaction object and select it for display. According to alternate embodiments of the invention, reports are generated of customer interactions, for example, to provide account management information or any other customer relationship management function.

Interaction objects 104(1) - 104(C) are integrated with reporting framework 112. In one embodiment of the invention, a hard-coded mapping is used to map fields from interaction objects 104(1) - 104(C) to report fields.

In one embodiment of the invention, interaction objects 104(1) - 104(C) are archived so that they are available for historical reporting. An interaction object 104 may be archived or deleted when an associated campaign is archived.

Figure 2 depicts an architectural view of an interaction object according to one embodiment of the present invention. The interaction object 104 stores data associated with communications. The data stored by interaction object 104 is data identifying the customer 202, the organization of the customer 204, the date of the communication 206, the associated marketing campaign 208 , if any, and the actual text of the message 210.

The customer 202 is the individual or the position of a person, such as "marketing contact" whom the communication was with. The organization of the customer 204 is the employer or other organization that the customer 202 is affiliated with. The date that of the communication may be the date that a communication was sent or received 206 or the date that a telephone conversation or video conference took place.

An identifier for the associated campaign 208 may be used to identify a particular marketing campaign or trade promotion so that the business partner who has organized the marketing campaign or trade promotion can, for example, track the response. In an alternate embodiment of the invention, a unique name will be associated with a particular scenario e.g., mass marketing contact. In this embodiment, an interaction object 104 used for mass marketing would have a different name from that used for a different scenario.

The actual text of the message 210 is the actual text of the communication e.g., e-mail, SMS text message, FAX or letter. Figures 7 and 8 illustrate an exemplary display of two of interaction objects 104(1) -104(C).

Figure 3 depicts an architectural view of a contact tracking storage 106 according to one embodiment of the present invention. In one embodiment of the invention, each interaction object 104(1) - 104(C) corresponds to an interaction object entry 306(1) - 306(F) in contact tracking storage 106. Contact tracking storage may also store customer interactions via synchronous communications, for example, telephone calls. According to one embodiment of the invention, each contact using synchronous communications corresponds to a synchronous contact entry 308(1) - 308(G) in the contact tracking storage 106. Contact tracking storage 106 may also include asynchronous/synchronous indicators 302(1) - 302(D) to indicate whether an entry uses asynchronous communications (e.g., e-mail, SMS text message, FAX or letter) or synchronous communications (e.g., telephone). Additionally, contact tracking storage 306 may include status fields 304(1) - 304(E) to provide reporting of contact status. Status indicators which may be populated in a status field may include 0 if contact is not established, 1 if contact is not possible because there is no communication data, 2 if contact is not possible because of incorrect communication data, 3 if contact is not possible because the business partner has maximized its list, 4 if contact is not possible because the business partner has locked its list, and 5 if contact is not possible because of technical problems. Contact tracking storage 306 may also include a link 310 from an inbound contact with a customer to a corresponding outbound contact with a customer. If interaction object 104 is used to store data relating to communications that are bi-directional, e.g., a telephone conversation, link 310 may simply reflect that the communication is bi-directional.

Figure 4 shows a method for providing customer relationship management by tracking customer interactions according to one embodiment of the present invention. In step 404, data is received.

In step 406, customer interaction tracker 102 determines whether that data details customer contact that was not an order. If, for example, order business processes include order objects that have an order pointer that points to them and/or are identified using an globally unique identifier (GUID) such as a "ORDER_GUID" field, if the incoming data has an order pointer pointing to it and/or is identified using an order GUID, then the data relates to an order. If the data relates to an order, customer interaction tracker 102 discontinues interaction object processing, as is shown in step 416. If the data does not relate to an order, processing continues to step 408.

In step 408, customer interaction tracker 102 may determine whether data was received using asynchronous or synchronous communications. In one embodiment of the invention, a field is used to indicate the type of communication e.g., 03 may be used for e-mail communications, 04 may be used for communications via letter, 05 may be used for communications via FAX, and 06 may be used for SMS text messages. In one embodiment of the invention, interaction tracker 102 may use this determination for tracking purposes. Interaction tracker 102 may track whether the communication was synchronous or asynchronous. If the data was received using asynchronous communications, in one embodiment of the invention, processing continues to step 408. In an alternate embodiment of the invention, if the data was not received using asynchronous communications, customer interaction tracker 102 discontinues interaction object processing.

In another alternate embodiment of the invention, customer interaction tracker 102 determines whether the communication relates to a campaign or promotion. A globally unique project identifier such as "PROJECT_GUID" can be used to identify the campaign or promotion. In this alternate embodiment of the invention, customer interaction tracker 102 may discontinue interaction processing if no project identifier is found. If a project identifier is found, processing may continue to step 410. In another alternate embodiment of the invention, the project identifier is used for reporting and is stored in contact tracking storage 106 but does not impact processing of customer interaction tracker 102.

In another alternate embodiment of the invention, customer interaction tracker 102 does not check whether the data was received using asynchronous or synchronous communication.

In step 410, customer interaction tracker 102 generates interaction object 104. Interaction object 104 is generated using object-oriented programming techniques such as those associated with object-oriented programming languages including ABAP, which is an object-oriented programming language designed by SAP to provided optimized select functionality from databases, Java and C++ programming languages. The ABAP programming language is described further in, for example, H. Keller et al., ABAP Objects: The Official Release. In one embodiment of the invention, interaction objects 104(1) - 104(C) are modeled using a business object layer tool that provides a unified interface for accessing business objects in terms of attributes and events based on a business object model. The business object layer also buffers relations and data during run-time to speed up data access.

If the interaction object is used to track customer contact via an asynchronous communication e.g., e-mail, SMS text message, facsimile or letter, the customer 202, and date of communication 206 may be retrieved from fields of the communication. For example, the recipient of the e-mail may be customer 202 and the date the e-mail was sent may be date of communication 206. Organization of customer 204 and associated campaign 208 may be either fields of the communication or retrieved from a database using fields within the communication. For example, organization of customer 204 may be retrieved from a database using the customer 202. Associated campaign 208 may be retrieved from a database using the sender of the e-mail. In an alternate embodiment of the invention, a user may enter customer 202, organization of customer 204, date of communication 206 and/or associated campaign 208. Actual text of message 210 may be directly retrieved from an e-mail or SMS text message. FAXes and letters may be stored using electronic file formats such as Adobe PDF.

If the interaction object is used to track customer contact via synchronous communication, e.g., telephone conversation or video conference, a user may enter customer 202, organization 204, date of communication 206, and/or associated campaign 208. In an alternate embodiment of the invention, customer 202 is derived from the telephone number or the IP address that is accessed for the telephone conversation or video conference. Date of communication 206 may be retrieved from the billing records relating to the communication. Organization of customer 204 and associated campaign 208 may be directly retrieved from billing records or derived from information stored in these records, such as by retrieving information from a database. Actual text of message 210 may be any file storing the actual voice and/or video image, such as an MPEG file, or storing the text of the voice or video communication.

In step 412, customer interaction tracker 102 stores interaction object 104 in the business object repository. In one embodiment of the invention, the interaction object 104 is modeled outside of order objects and has a unique repository that is independent from the business order repository. To integrate the texts of the communication into front-end software to display the interaction object 104, a uniform resource locator (URL) may be transferred to a hyper-text markup language controller. An interaction object entry 306 is created in contact tracking storage 106 corresponding to the interaction object 104.

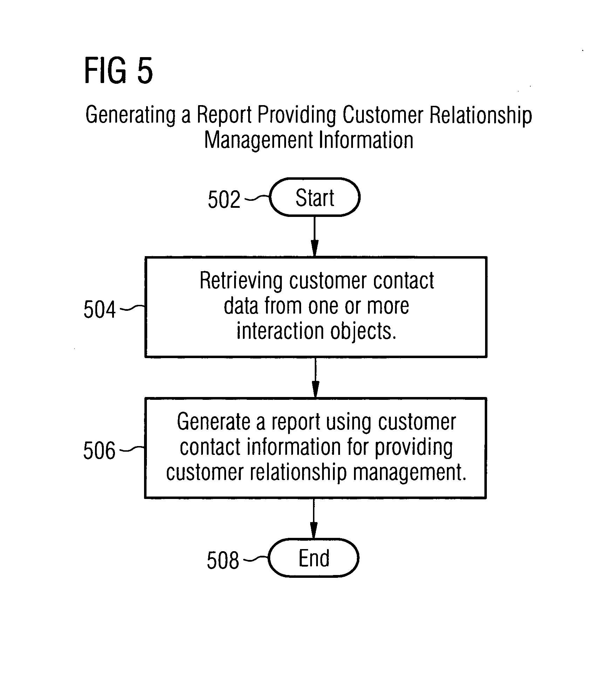

Figure 5 shows a method for generating a report providing customer relationship management information according to one embodiment of the present invention.

In step 504, the reporting framework 112 retrieves customer contact data from one or more interaction objects. In one embodiment of the invention, the reporting framework 112 operates by fulfilling search criteria for a search performed using, for example, a globally unique identifier. According to one embodiment of the invention, order business process data and interaction object data is mixed in a centralized location in the reporting framework 112 so that user interface applications can operate with a single interface. To accommodate this mix, two steps may be used to distinguish between order business process data and interaction object data. A user may also specify sort criteria in step 504.

In step 506, the reporting framework 112 generates a report using customer contact information for providing customer relationship management. In step 506, reporting framework 112 finds the requested fields for the report and then provides a report via, for example, a display. Alternate embodiments of the invention include electronic reports stored in, for example, files and paper reports. If the user specified sort criteria in step 504, the data will be displayed as sorted according to that criteria in step 506.

Figure 6a depicts the display of interaction objects resulting from a search according to one embodiment of the present invention. As illustrated in Figure 6a, one possible search criteria is a range of dates that the contact was made or received. Those of interaction objects 104(1) - 104(C) that are identified as a result of the search are displayed, as is illustrated in Figure 6. A user may then specify an interaction object 104 for display.

Figure 6b depicts the display of an interaction object selected from the search results according to one embodiment of the invention. As illustrated in Figure 6b, each of the elements of the interaction object described with respect to Figure 2 may be displayed. Additionally, the search criteria that was used to retrieve this interaction object may also be displayed.

Figure 7 depicts the display of an interaction object generated as the result of sending an E-mail or SMS message according to one embodiment of the present invention. Data stored in the interaction object 104, which is illustrated in Figure 2, is displayed including the customer 202 that made contact or was contacted, the organization of the customer 204, the date the communication was sent or received 206, the associated campaign 208, and the actual text of the message 210.

Figure 8 depicts the display of an interaction object generated as the result of sending a FAX or letter according to one embodiment of the present invention. Data stored in interaction object 104 (see FIG. 2) is displayed. The FAX or letter may be displayed using an electronic file format such as Adobe PDF.

Figure 9 depicts the display of previous interactions with a customer and a user interface for receiving follow-up actions according to one embodiment of the present invention. Follow-up transactions code is computer code used to perform transactions that follow-up on customer interactions represented by any one of interaction objects 104(1) - 104(C). In one embodiment of the invention, follow-up transactions include business activity, an outgoing e-mail, or an outgoing phone call. In alternate embodiments of the invention, follow-up transactions may be customized to include any one or more of a sales call, task, business activity, quotation, auction, lead or any other follow-up transaction. Screens illustrated in Figures 6a through 9 may be displayed on a user interface.

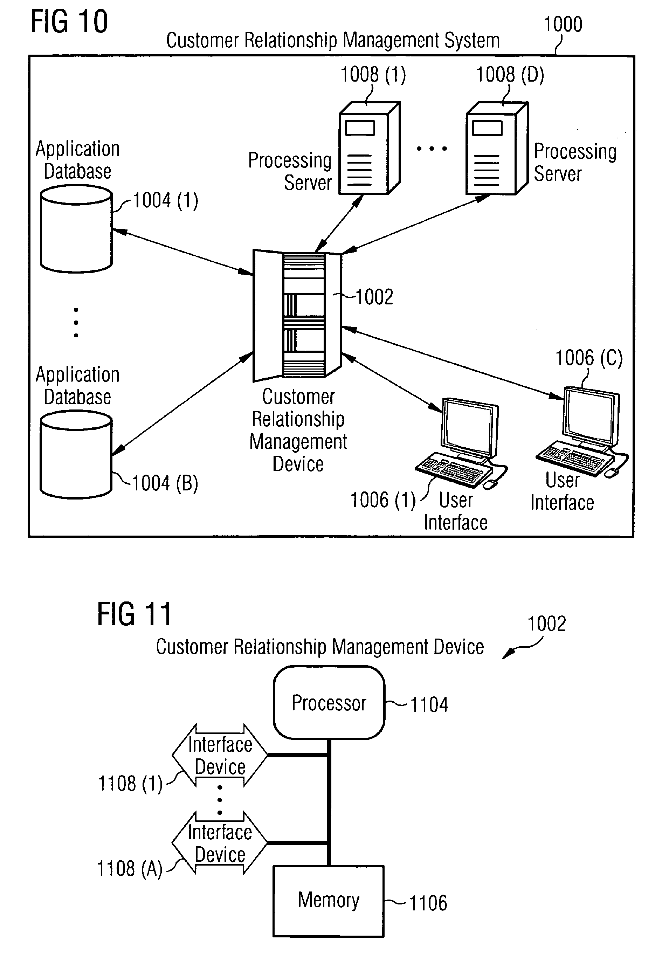

Figure 10 shows a customer relationship management system 1000 according to one embodiment of the invention. Customer relationship management system 1000 comprises customer relationship management device 1002, application databases 1004(1) - 1004(B), user interfaces 1006(1) - 1006(C) and processing servers 1008(1) - 1008(D). Customer relationship management device may process and/or store customer interaction tracker 102 and/or contact tracking storage 106. In an alternate embodiment of the invention, contact tracking storage 106 resides on a database that is external to, but connected to customer relationship management device 1002.

Each of application databases 1004(1) - 1004(B) are each a processing system that processes an application. Application 110 may run on application database 1004(1) - 1004(B). An application is any set of electronic data including electronic data stored in one or more files or in a portion of a file that is processed to perform a specific function typically for a user. In one embodiment of the invention, application databases 1004(1) - 1004(B) process customer relationship management applications that are used to perform marketing planning, campaign management, customer segmentation, other marketing analysis, sales planning and forecasting, sales organizational and territory management, account and contact management or other sales support or analysis. One example of customer relationship management application is an account management application. Applications are typically implemented as middleware (e.g., application client and server).

User interface 1006 is a front-end device and is a user interaction device (e.g., a client computer having a graphical user interface (GUI) or a Web browser) through which a user can interact with an implementation of the system and techniques described here. User interaction devices may be devices that can be used to provide interaction with a user such as an output device (e.g., liquid crystal display (LCD) monitor or cathode ray tube (CRT) monitor) for displaying information to a user and an input device (e.g., keyboard, mouse, trackball) by which the user can provide input to the computer. Other types of user interaction devices can be used to provide to the user any form of sensory feedback (e.g., visual feedback, auditory feedback, or tactile feedback) and input from the user can be received in any form including acoustic, speech, or tactile input.

Processing servers 1008(1) - 1008(D) are software and/or hardware that perform a specific service or function. Processing servers 1008(1) - 1008(D) operate with any client software that requests a specific service.

The components of the customer relationship management system 1000 can be interconnected by any form of medium or digital data communication, including a local area network, and a wide area network. Customer relationship management system 1000 can be implemented in a computing system that includes any combination of one or more back-end components (e.g., as a data servers), middleware components (e.g., application servers), or front-end components (user interfaces). In an alternate embodiment of the invention, customer relationship management system 1000 may operate within a single processor and a single memory.

Figure 11 depicts a customer relationship management device 1002 according to one embodiment of the invention. Customer relationship management device 1002 is a includes processor 1104, memory 1106, and interface devices 1108 (1) - 1108 (A). Processor 1104 is connected to memory 1106. Processor 1104 is also connected to interface devices 1108 (1) - 1108(A). These connections are direct or via other internal electronic circuitry or components.

Processor 1104 is a programmable processor that executes instructions residing in memory 1106 to receive and send data via interface devices 1108(1) -1108(A). A programmable processor may be any programmable microprocessor or processor or combination of microprocessors or processors that can operate on digital data, which may be special or general purpose processors coupled to receive data and instructions from, and to transmit data and instructions to, a machine-readable medium. According to one embodiment of the present invention processor 104 is an Intel microprocessor.

Memory 1106 is a machine-readable medium that stores data that is processed by processor 1104. Machine-readable medium may be any addressable storage device that stores digital data including any computer program product, apparatus and/or device (e.g., a random access memory (RAM), read only memory (ROM), magnetic disc, optical disc, programmable logic device (PLD), tape, or any combination of these devices). This may include external machine-readable mediums that are connected to processor 1104 via one or more interface devices 1108(1) - 1108 (A).

Interface devices 1108 (1) - 1108 (A) are interfaces that receive and/or send digital data to and from an external device. Interfaces may be any point of access to an external device where digital data is received or sent, including ports, buffers, queues, subsets thereof, or any other interface to an external device.

Various implementations of the systems and techniques described here can be realized in any processing systems and/or digital electronic circuitry, integrated circuitry, specially designed ASICs (application specific integrated circuits), computer hardware, firmware, software, and/or combinations thereof. There various implementations can include computer code.

A number of embodiments of the invention have been described. Nevertheless, it will be understood that various modifications may be made..

## Claims

1. A system for providing customer relationship management by tracking an interaction with a customer comprising:
a processor;
a memory coupled to the processor; and
a customer interaction tracking environment residing in the memory and executed by the processor, said customer interaction tracking environment comprising:
a customer interaction tracker to generate one or more interaction objects, each object storing customer interaction data from said interaction with said customer;
a contact tracking storage to store data associated with at least one of said one or more interaction objects; and
an application providing customer relationship management functions to users by retrieving said object storing customer interaction data.

2. The system according to claim 1, wherein said customer interaction tracking environment further comprises:
a reporting framework to report said customer interaction data.

3. The system according to claim 1 or 2, wherein said customer interaction data is data received as the result of a marketing campaign or trade promotion.

4. The system according to anyone of the preceding claims, wherein said customer interaction data includes a name identifying said customer and a date of said interaction.

5. The system according to anyone of the preceding claims, wherein said customer interaction tracking environment further comprises:
follow-up transactions code to respond to an interaction represented by one of said one or more interaction objects.

6. The system according to anyone of the preceding claims, wherein said contact tracking storage further comprises:
one or more status fields, wherein at least one of said one or more status fields corresponds to one of said one or more interaction objects.

7. The system according to anyone of the preceding claims, wherein said contact tracking storage stores data in a table.

8. The system according to anyone of the preceding claims and claim 2, wherein said reporting framework produces reports generated by specifying a business partner.

9. The system according to anyone of the preceding claims, wherein said customer interaction tracking environment further comprises an archiver for archiving said one or more interaction objects.

10. The system according to claim 1, wherein said interaction is made using asynchronous communications.

11. A method for tracking customer interactions, comprising:
receiving customer interaction data relating to an interaction with a customer;
creating a customer interaction object, said customer interaction object including fields for text of said interaction and data fields for a specific customer interaction including a name of said customer and a date of said interaction; and
storing said customer interaction data in said customer interaction object.

12. The method according to claim 11, wherein said data is received as the result of a marketing campaign or trade promotion.

13. The method according to claim 11 or 12, wherein said interaction uses asynchronous communications.

14. The method according to anyone of the preceding claims 11 to 13, further comprising the steps of
specifying search criteria for generating a report;
retrieving specified data from one or more retrieved customer interaction objects corresponding to said search criteria; and
generating a report using said specified data to provide analysis of customer interactions for customer relationship management.

15. The method according to claim 14, further comprising the step of displaying the report in a generic user interface associated with a business application.

16. The method according to anyone of the preceding claims 11 to 15, further comprising-the step of selecting one or more follow-up transactions for responding to an interaction represented by said customer interaction object.

17. The method according to anyone of the preceding claims 11 to 16 and claim 14, wherein said search criteria comprises one or more statuses reflecting the status of an interaction.

18. The method according to anyone of the preceding claims 11 to 17, further comprising the step of archiving at least one of said one or more interaction objects.

19. A system for providing customer relationship management by tracking customer interactions comprising
means for receiving customer interaction data relating to a customer interaction;
means for creating a customer interaction object, said customer interaction object including data fields for a specific customer interaction and text of said interaction;
means for storing said customer interaction data in fields of said customer interaction object.

20. The system according to claim 19, further comprising:
means for specifying search criteria for generating a report;
means for retrieving specified customer interaction data from said one or more interaction object corresponding to said search criteria; and
means for generating a report using said specified customer interaction data for providing analysis of customer interactions for customer relationship management.

21. Computer readable medium storing thereon program instructions that, when executed, cause an executing device to:
receive customer interaction data relating to an interaction with a customer;
create a customer interaction object, said customer interaction object including fields for text of said interaction and data fields for a specific customer interaction including a name of said customer and a date of said interaction;
store said customer interaction data in fields of said customer interaction object.

22. The computer readable medium according to claim 21, wherein said data is received as the result of a marketing campaign or trade promotion.

23. The computer readable medium according to claim 21 or 22, wherein said interaction uses asynchronous communications.

24. The computer readable medium according to anyone of the preceding claims 21 to 23 storing thereon program instructions that, when executed, further cause the executing device to:
specify search criteria for generating a report;
retrieve specified data from one or more retrieved customer interaction objects corresponding to said search criteria; and
generate a report using said specified data to provide analysis of customer interactions for customer relationship management.

25. The computer readable medium according to anyone of the preceding claims 21 to 24 storing thereon program instructions that, when executed, further cause the executing device to display the report in a generic user interface associated with a business application.

26. The computer readable medium according to anyone of the preceding claims 21 to 25 storing thereon program instructions that, when executed, further cause the executing device to select one or more follow-up transactions for responding to an interaction represented by said customer interaction object.

27. The computer readable medium according to anyone of the preceding claims 21 to 26 wherein said search criteria comprises one or more statuses reflecting the status of an interaction.

28. The computer readable medium according to anyone of the preceding claims 21 to 27 storing thereon program instructions that, when executed, further cause the executing device to archive at least one of said one or more interaction objects.
